# EUROPÄISCHE PATENTSCHRIFT

(11) **EP 1 858 701 B1**
(45) Veröffentlichungstag und Bekanntmachung des Hinweises auf die Patenterteilung: **11.08.2010**
(21) Anmeldenummer: 06723221.5
(22) Anmeldetag: 06.03.2006
(51) Int. Cl.: B32B 27/08, B32B 27/30, B32B 27/32, B65D 65/40, A22C 13/00

(54) **MEHRSCHICHTIGE NAHRUNGSMITTELHÜLLE MIT ZWEI SAUERSTOFF-BARRIERESCHICHTEN**
MULTILAYER FOODSTUFF WRAPPING PROVIDED WITH TWO OXYGEN-BARRIER LAYERS
ENVELOPPE ALIMENTAIRE MULTICOUCHE COMPORTANT DEUX COUCHES BARRIERE A OXYGENE

(30) Priorität: 08.03.2005 DE 102005011089
(43) Veröffentlichungstag der Anmeldung: 28.11.2007
(73) Patentinhaber: Kalle GmbH, 65203 Wiesbaden (DE)
(72) Erfinder: DELIUS, Ulrich, 60529 Frankfurt (DE)
(74) Vertreter: Plate, Jürgen
(86) Internationale Anmeldenummer: PCT/EP2006/002011
(87) Internationale Veröffentlichungsnummer: WO 2006/094733

(56) Entgegenhaltungen:
- EP-A- 0 530 538
- EP-A- 0 603 676
- EP-A- 0 824 067
- WO-A-03/093009
- DE-U1- 20 217 987
- US-A1- 2004 052 991

## Beschreibung

Die Erfindung betrifft eine mehrschichtige, schlauchförmige Nahrungsmittelhülle sowie deren Verwendung als künstliche Wursthülle.

Nahtlose, schlauchförmige Kunststoffhüllen werden überwiegend zur Herstellung von Koch- und Brühwurst verwendet. Allgemein wird eine möglichst hohe Lagerfähigkeit der Wurst angestrebt. Dafür wurden Hüllen mit einer verminderten Durchlässigkeit für Wasserdampf und/oder Sauerstoff entwickelt. Durch die Wasserdampf-Sperrwirkung wird ein vorzeitiges Austrocknen während der Lagerung und durch die Sauerstoff-Barriere eine Oxidation des Wurstbrätes verhindert. Eine beginnende Oxidation ist an einer grauen Verfärbung der Brätoberfläche zu erkennen. Eine fortschreitende Oxidation führt schließlich zum Verderb der Wurst.

Aus Vinylidenchlorid-Copolymeren ("PVDC") lassen sich nach thermoplastischen Verfahren einschichtige Hüllen mit guter Wasserdampf- und Sauerstoffbarriere herstellen. Diese speziellen Copolymere sind jedoch kostspielig, wegen ihrer geringen thermischen Stabilität nur über spezielle Extruder zu verarbeiten und wegen ihres Chlorgehaltes wenig umweltverträglich. Diese Nachteile sollen mit mehrschichtigen Hüllen aus anderen Polymeren vermieden werden, bei denen die Sauerstoff- und die Wasserdampf-Sperrwirkung in unterschiedlichen Schichten eintritt.

Sehr hohe Sauerstoff-Sperrwirkungen wurden durch Mehrschichthüllen mit einer innenliegenden Schicht aus EVOH und mit umgebenden Schichten aus (modifizierten) Polyolefinen sowie Polyamiden erzielt.

In der EP-A 0 530 539 ist eine biaxial verstreckte Schlauchfolie mit einer äußeren Schicht aus aliphatischem Polyamid, einer zentralen Sauerstoff-Sperrschicht aus EVOH oder aus (teil)aromatischem Copolyamid und einer inneren Schicht aus olefinischen (Co-)Polymeren offenbart.

In der EP-A 0 530 549 ist ebenfalls eine dreischichtige Hülle mit einer zentralen EVOH-Schicht offenbart. Die äußere Schicht besteht hier aus olefinischen (Co-)Polymeren, während die innere aus aliphatischem Polyamid gebildet wird.

In der EP-A 0 603 676 ist eine biaxial verstreckte, fünfschichtige Schlauchfolie beschrieben. Die Schichtabfolge in dieser Hülle ist symmetrisch. Beiderseits angrenzend an eine zentrale EVOH-Schicht befinden sich Schichten aus Polyolefin, auf die wiederum jeweils eine Schicht aus aliphatischem Polyamid folgt.

In der EP-A 0 658 310 ist eine mindestens vierschichtige, coextrudierte, biaxial verstreckte, schlauchförmige, nahtlose Wursthülle offenbart. Die Hülle umfaßt jeweils eine Schicht überwiegend aus aliphatischem Polyamid auf der Innen- und Außenseite und dazwischen mindestens eine wasserdampfsperrende, polyolefinische Schicht und mindestens eine sauerstoffsperrende Schicht aus EVOH. Mindestens eine der Schichten enthält feinstteilige, anorganische Pigmente mit einer mittleren Korngröße von 0,01 bis 5 µm und mindestens eine der Polyamidschichten 1 bis 15 Gew.-% an teilaromatischem Polyamid.

Aus der EP-A 0 879 560 sind ebenfalls mindestens vierschichtige, biaxial verstreckte Nahrungsmittelhüllen mit einer äußeren Schicht aus aliphatischem und teilaromatischem (Co-)Polyamid, einer zweiten EVOH-haltigen Schicht, einer dritten Schicht aus olefinischem (Co-)Polymer und einer vierten, inneren Schicht aus aliphatischem (Co-)Polyamid bekannt.

In der EP 0 824 067 A sind mehrschichtige, coextrudierte Folien offenbart, auch solche in Schlauchform. Sie sind vorgesehen für die Verpackung unter anderem vom flüssigen oder pastösen Nahrungsmitteln. Konkret beschrieben sind Folien mit 6 bis 13 Schichten. Wesentlicher Bestandteil der Folien ist eine innenliegende Schicht aus einem cyclischen Olefin-Copolymeren (COC). In einer besonderen Ausführungsform umfaßt die Folie daneben eine innenliegende Sauerstoff-Barriereschicht. Die Barriereschicht enthält bevorzugt Ethylen/Vinylalkohol-Copolymere (EVOH), alternativ auch aliphatische oder teilaromatische Polyamide. Beschrieben sind ferner Folien, die neben einer innenliegenden auch eine außenliegende Barriereschicht aufweisen, wobei die beiden Barriereschichten voneinander getrennt sind.

Gegenstand des Gebrauchsmusters DE 202 17 987 U1 sind flächen- oder schlauchförmige Nahrungsmittelhüllen mit mindestens 6 Schichten, die eine hohe Sauerstoffbarriere bei einer zufriedenstellenden Schrumpfrate aufweisen. Jeweils eine innenliegende Schicht besteht dabei aus EVOH.

In der WO 03/093009 sind Kartonverpackungen beschrieben, bei denen auf die Innenseite des Kartons zunächst eine Polyamidschicht und eine Haftschicht aufgebracht und dann eine mehrschichtige Flachfolie auflaminiert wurde. Sie sind als Getränkeverpackung vorgesehen. Die Folie bewirkt, daß möglichst wenig Sauerstoff und Feuchtigkeit durch die Verpackung dringt. Vorzugsweise weist sie 7 Schichten auf, wobei die 1. und 7. Schicht Polyolefinschichten, die 3. und die 5. Schicht EVOH-Schichten und die übrigen Schichten Haftschichten sind. Auf der Außenseite der Kartonmaterials ist vorzugsweise eine Polyolefinfolie auflaminiert, die für den Glanz der Verpackung sorgt.

In der US 2004/052991 A1 ist schließlich eine mehrschichtige Schrumpffolie zur Verpackung von Nahrungsmitteln offenbart. Sie umfassen mindestens eine innenliegende Gasbarriereschicht auf Basis von EVOH, jedoch keine Schichten auf Basis von Polyamid. Die Barriereschicht enthält zusätzlich etwa 5 bis 30 Gew.% an Weichmacher, beispielsweise Propandiol, Propantriol oder Glycerin, damit sie ausreichend verstreckbar ist.

Die meisten Produkte gemäß Stand der Technik haben eines gemeinsam, nämlich daß -ungeachtet der Zahl ihrer Schichten - immer nur eine Schicht aus EVOH besteht bzw. diesen Polymertyp enthält. Hieraus resultiert ein Risiko bezüglich der Zuverlässigkeit der Sauerstoffbarriere unter den in der Praxis auftretenden Belastungen.

Nahrungsmittelhüllen, insbesondere Wursthüllen, unterliegen bis zum Ende ihrer Verarbeitung großen mechanischen Belastungen. So werden Wursthüllen vor ihrem Einsatz für die Wurstabfüllung zunächst zu sogenannten "Raupen" aufgestockt. Die Herstellung der Raupen erfolgt maschinell und unter Ausbildung einer Vielzahl von Falten in der Folienfläche. Vor dem Füllen werden die Raupen in der Regel in Wasser eingeweicht. Dabei kommt es zu einer Quellung bei den an der Folienoberfläche liegenden Polyamidschichten, während die darunter liegenden Schichten aus Polyolefin und EVOH wegen ihres hydrophoberen Charakters keine bzw. kaum Quellung zeigen. Der E-Modul der Polyamidschichten sinkt durch die Quellung stark ab, während die sonstigen Schichten in ihrer Mechanik weitgehend unverändert bleiben.

Beim Füllen wird die Hülle vom Ende einer Raupe abgezogen und sequenziell mit Wurstbrät gefüllt. Am Anfang und Ende jeder Wurst wird die Hülle mechanisch zu einem "Zopf" verdichtet. Dieser wird durch festes Umschlingen mit dünndrähtigen Metallclips verschlossen. Unter den Metallclipsen entsteht ein starker Preßdruck auf das gefaltete Hüllenmaterial.

Sowohl beim Raffen wie auch beim Anbringen der Metallclips bilden sich scharfkantige Falten in der Folie. Nach dem Einweichen der Raupen in Wasser sind vorhandene Polyamidschichten gequollen und relativ flexibel. Polyolefinische Schichten, insbesondere die üblichen Polyethylen-Schichten, sind von Natur aus relativ weich und geben unter der Biegebelastung leicht nach. Schichten aus EVOH zeigen wegen des höheren E-Moduls dieses Polymers den höchsten Biegewiderstand. Bei einer Faltung des Hüllenmaterials unterliegen vorhandene EVOH-Schichten wegen ihrer höheren Steifigkeit daher dem größten Bruchrisiko. In den EVOH-Schichten können sich Mikrorisse oder Perforationen bilden. Solche Defekte ergeben Unterbrechungen der Sauerstoffbarriere und führen beim Füllgut in der Regel zu lokaler Oxidation, oft sogar zu vorzeitigem Verderb.

Aufgabe der Erfindung war es daher, eine Schlauchfolie zur Umhüllung von Lebensmitteln, insbesondere Wurstwaren, bereitzustellen, die nicht nur allen wesentlichen, insbesondere mechanischen, Anforderungen genügt, sondern eine sehr gute Sperrwirkung für Wasserdampf und Sauerstoff aufweist und darüber hinaus eine verbesserte Toleranz der Sauerstoff-Barrierefunktion gegenüber mechanischen Belastungen der Hülle besitzt.

Diese Aufgabe wird gelöst durch eine mehrschichtige, schlauchförmige Nahrungsmittelhülle, dadurch gekennzeichnet, daß sie mindestens sechsschichtig ist und daß zwei innenliegende, voneinander isolierte Schichten EVOH-Copolymer enthalten. Die schlauchförmige Hülle ist vorzugsweise nahtlos.

Unter dem Begriff "EVOH-Copolymer" sollen im Zusammenhang mit der vorliegenden Erfindung Copolymere verstanden werden, die im wesentlichen aus Ethylen- und Vinylalkohol-Einheiten aufgebaut sind, in untergeordnetem Maße daneben jedoch auch noch andere Einheiten enthalten können, insbesondere Vinylacetat-Einheiten. EVOH-Copolymere werden üblicherweise aus EthylenNinylacetat-Copolymeren durch Verseifen hergestellt, wobei die Verseifung meist nicht quantitativ verläuft, so daß noch Vinylacetat-Einheiten verbleiben. Schichten, die EVOH-Copolymere enthalten, werden nachfolgend als "EVOH-Schichten" bezeichnet. Der Anteil der "anderen" Einheiten" beträgt allgemein nicht mehr als 5 mol-%, bevorzugt nicht mehr als 3 mol-%, besonders bevorzugt nicht mehr als 2 mol-%. Als "innenliegend" wird eine Schicht bezeichnet, die auf beiden Seiten an weitere Schichten grenzt, also weder die äußere noch die innere Oberfläche der Hülle bildet.

Die weiteren Schichten bestehen im wesentlichen aus (Co-)Polyamiden, olefinischen (Co-)Polymeren und/oder Polymeren mit haftvermittelnden Eigenschaften, insbesondere anhydrid-modifizierten Olefin-(Co-)Polymeren und/oder Copolymeren von Ethylen mit heterofunktionellen Vinylmonomeren (wie Vinylacetat, (Meth)Acrylsäure oder Methylacrylat) oder aus Gemischen dieser Haftvermittler-Polymere mit anderen Polymeren. Die beiden EVOH-Schichten schaffen eine "Redundanz" der Sauerstoff-Barriere. Bei lokaler Beschädigung einer der EVOH-Schichten steht eine weitere Schicht zur Verfügung, um den Sauerstoffzutritt zu unterbinden. Die EVOH-Schichten enthalten mindestens 50 Gew.-% EVOH-Copolymere. Sie können daneben andere Polymere enthalten, soweit diese nicht ihre Sauerstoff-Barriereeigenschaften wesentlich verschlechtern. Die beiden EVOH-Schichten haben vorzugsweise die gleiche Zusammensetzung. Bei der Herstellung der Hülle genügt dann ein einziger Extruder für beide Schichten. Die Schichten können jedoch auch unterschiedlich zusammengesetzt sein.

Die Abfolge der Schichten der mehrschichtigen Hülle ist bevorzugt wie folgt (links = Außenseite der Hülle):

| | | |
|---|---|---|
| 1a) | PA // EVOH // PA // EVOH // HV // PA | (6 Schichten) |
| 1b) | PA // EVOH // PA // EVOH // HV // PO | (6 Schichten) |
| 1c) | PA // EVOH // HV // EVOH // HV // PO | (6 Schichten) |
| 2a) | PA // HV // EVOH // PA // EVOH // HV // PA | (7 Schichten) |
| 2b) | PO // HV // EVOH // PA // EVOH // HV // PA | (7 Schichten) |
| 2c) | PA // HV // EVOH // PA // EVOH // HV // PO | (7 Schichten) |
| 2d) | PO // HV // EVOH // PA // EVOH // HV // PO | (7 Schichten) |
| 2e) | PA // HV // EVOH // HV // EVOH // HV // PA | (7 Schichten) |
| 2f) | PA // HV // EVOH // HV // EVOH // HV // PO | (7 Schichten) |
| 2g) | PO // HV // EVOH // HV // EVOH // HV // PA | (7 Schichten) |
| 3a) | PA // HV // EVOH // PA // EVOH // PA // HV // PA | (8 Schichten) |
| 3b) | PO // HV // EVOH // PA // EVOH // PA // HV // PA | (8 Schichten) |
| 3c) | PA // HV // EVOH // PA // EVOH // PA // HV // PO | (8 Schichten) |
| 3d) | PA // HV // EVOH // HV // EVOH // PA // HV // PA | (8 Schichten) |
| 3e) | PA // HV // EVOH // HV // EVOH // PA // HV // PO | (8 Schichten) |
| 3f) | PO // HV // EVOH // HV // EVOH // PA // HV // PA | (8 Schichten) |
| 4a) | PA // EVOH // PA // HV // EVOH // HV // PA | (7 Schichten) |
| 4b) | PA // EVOH // HV // PA // EVOH // HV // PA | (7 Schichten) |
| 4c) | PA // EVOH // PA // HV // EVOH // HV // PO | (7 Schichten) |
| 4d) | PA // EVOH // HV // PA // EVOH // HV // PO | (7 Schichten) |
| 5a) | PA // HV // EVOH // PA // HV // EVOH // HV // PA | (8 Schichten) |
| 5b) | PA // HV // EVOH // HV // PA // EVOH // HV // PA | (8 Schichten) |
| 5c) | PO // HV // EVOH // PA // HV // EVOH // HV // PA | (8 Schichten) |
| 5d) | PO // HV // EVOH // HV // PA // EVOH // HV // PA | (8 Schichten) |
| 5e) | PA // HV // EVOH // PA // HV // EVOH // HV // PO | (8 Schichten) |
| 5f) | PA // HV // EVOH // HV // PA // EVOH // HV // PO | (8 Schichten) |
| 5g) | PO // HV // EVOH // PA // HV // EVOH // HV // PO | (8 Schichten) |
| 5h) | PO // HV // EVOH // HV // PA // EVOH // HV // PO | (8 Schichten) |

Die Symbole PA, PO, HV, EVOH haben folgende Bedeutungen:
- PA =: Schicht überwiegend aus aliphatischem (Co-)Polyamid (z.B. PA 6, PA 66, PA 6/66, PA 6/69, PA 6/12, PA 12), aus Mischungen dieser Polyamide, ggf. auch mit Beimischungen von teilaromatischen Polyamiden (z.B. Nylon-MXD6, PA6-I/6/T) und/oder von Polymeren anderen Typs (z.B. EMAA-Copolymer),
- PO =: Schicht überwiegend aus olefinischem (Co-)Polymer, z.B. Poly- ethylen (HDPE oder LDPE), Ethylen-α-Olefin-Copolymeren, Poly- propylen, Ethylen-Propylen-Copolymeren, Terpolymeren aus ver- schiedenen Olefinen. Anteilig können auch heterofunktionelle Olefin- Copolymere enthalten sein, beispielsweise Copolymere aus Ethylen und Vinylacetat, Ethylen und (Meth)Acrylsäure, die entsprechenden Na- bzw. Zn-lonen enthaltenden lonomere, Copolymere aus Ethylen und Alkylestern der (Meth)Acrylsäure sowie entsprechende funk- tionelle Terpolymere.
- HV =: Schicht überwiegend aus olefinhaltigem Polymer, das mit funk- tionellen Gruppen modifiziert ist und dadurch eine Haftung zu angrenzenden Schichten aus Polyamid oder EVOH ausbilden kann. Beispiele: Polyethylen (bzw. Ethylen-α-Olefin-Copolymer) gepfropft mit Anhyrid einer α,β-ungesättigten Dicarbonsäure (speziell Malein- säureanhydrid), Ethylen/Vinylacetat-Copolymere, Ethylen/(Meth)- Acrylsäure-Copolymere und deren Na- oder Zn-Salze, Ethylen/ (Meth)Acrylsäureester-Copolymere sowie entsprechende Terpoly- mere. Als Beimischung können u.a. nicht funktionalisierte Olefin- (Co-)Polymere enthalten sein.
- EVOH =: Schicht auf Basis von Ethylen/Vinylalkohol-Copolymer. Dieses enthält bevorzugt 29 bis 47 mol-% Ethylen-Einheiten, 71 bis 53 mol% Vinylalkohol-Einheiten und 0 bis 5 mol-% Vinylacetat- Einheiten. Anteilig, bis zu < 50 Gew.-%, können weitere Polymere enthalten sein, insbesondere aliphatische oder teilaromatische Copolyamide (speziell PA 6/69, PA 6/12, PA 6-I/6-T) und/oder ethylenische Copolymere (speziell Copolymere von Ethylen und Acrylsäure, Ethylen und Methacrylsäure oder die entsprechenden, Na- bzw. Zn-Ionen enthaltenden lonomere).

Alle Schichten, insbesondere Schichten vom Typ PA und PO können noch übliche Additive enthalten, z.B. mineralische und/oder organische Füllstoffe (auch nanoskalige Partikel), Farb- und Antiblockpigmente, Mattierungsmittel, grobkörnige Pigmente zum Erzielen einer rauhen Oberflächenstruktur, UV-Absorber, Weichmacher und Stabilisatoren.

Die Schichten besitzen allgemein folgende Dicken:

| | |
|---|---|
| PA: | 5 bis 40 µm, wobei der Dickenanteil aller PA-Schichten an der Gesamtstruktur 40 bis 70 % beträgt. |
| PO: | 5 bis 30 µm, wobei der Dickenanteil aller PO-Schichten an der Gesamtstruktur 20 bis 50 % beträgt, |
| HV: | 2 bis 20 µm, |
| EVOH: | 2 bis 15 µm. |

Unter den vorstehenden Schichtstrukturen sind (1a), (2a), (2c), (2e), (3c), (4a), (5a) und (5e) bevorzugt. Besonders bevorzugt sind (2a), (2c) und (4a).

Speziell bevorzugt sind Schichtstrukturen des Typs (2a), (2c) und (4a) mit folgenden prozentualen Dicken der Einzelschichten (von außen nach innen dargestellt):
2a) 20-50% // 2-10% // 5-10% // 10-30% // 5-10% // 10-30% // 5-20%
2c) 20-60% // 2-10% // 5-10% // 10-30% // 5-10% // 2-10% // 10-20%
4a) 20-40% // 5-10% // 5-15% // 5-15% // 5-10% // 10-30% // 5-20%

Die Gesamtdicke der Hülle bewegt sich vorzugsweise im Bereich zwischen 35 und 70 µm.

Die Herstellung der erfindungsgemäßen Hülle gemäß erfolgt allgemein durch Coextrusion mit Hilfe von Mehrschicht-Ringdüsen und vorzugsweise durch anschließendes Schlauchblasen oder durch biaxiale Schlauchverstreckung. Letzteres Verfahren ist besonders bevorzugt, da infolge der Orientierung des Schlauches dieser eine überragende Deformationsbeständigkeit mit verbesserten Rückverformungseigenschaften sowie ein thermisches Schrumpfvermögen erlangt. Entsprechende Verfahren sind publiziert und dem Fachmann an sich geläufig.

Üblicherweise werden die für jede Schicht vorgesehenen Kunststoffe bzw. deren Abmischungen in separaten Extrudern aufgeschmolzen und plastifiziert sowie in einer beheizten Coextrusions-Ringdüse zusammengeführt. Der austretende ringförmige Schmelzefilm kann nun entweder direkt zu einem Folienschlauch aufgeblasen oder durch einen Biaxial-Streckprozeß mit gegebenenfalls anschließender Thermofixierung geführt werden. Bei letzterem Prozeß wird der Schmelzefilm durch schnelles Abkühlen zu einem weitgehend amorphen Vorschlauch verfestigt und dieser durch anschließendes Wiedererwärmen (typischerweise auf etwa 60 bis 90°C) und mit Hilfe eines zwischen zwei Quetschwalzenpaaren eingeschlossenen Luftpolsters biaxial verstreckt. Die anschließende Thermofixierung kann erfolgen, indem der verstreckte Schlauch durch eine weitere Heizzone, gegebenenfalls stabilisiert durch ein weiteres Luftpolster, geführt wird. Hierdurch läßt sich die thermische Schrumpfneigung auf praxistaugliche Werte verringern, die in der Regel im Bereich von 5 bis 20% in Längs- und Querrichtung liegen (gemessen bei 80°C).

Die erfindungsgemäße Nahrungsmittelhülle kann in übliche Weise konfektioniert werden, beispielsweise durch abschnittsweises Aufstocken zu sogenannten Raffraupen.

Die nachfolgenden Beispiele sollen die Erfindung illustrieren, ohne sie in irgendeiner Weise zu beschränken. Prozente sind darin Gewichtsprozente, soweit nicht anders angegeben oder aus dem Zusammenhang ersichtlich.

### Beispiele

### Ausgangsmaterialien:

- PA1:: Polyamid 6 mit einer relativen Viskosität von 4 (gemessen in 96 %iger Schwefelsäure) (®Ultramid B40 der BASF AG)
- PA2:: Polyamid 6/66 (82:18 Gewichtsanteile) mit einer relativen Viskosität von 4 (gemessen in 96 %iger Schwefelsäure) (®Ultramid C40 der BASF AG)
- EVOH:: Ethylen-Vinylalkohol-Copolymer (32 mol-% Ethylen) mit einem Melt Flow Index (MFI) von 1,6 g/10 min (gemessen unter 2,16 kg Last und bei 190°C) (®EVAL F101A der Kuraray Co. Ltd.)
- HV:: Lineares Polyethylen niederer Dichte (LLDPE), gepfropft mit ca. 0,3 Gew.-% Maleinsäuranhydrid (MSA) und mit einem MFI von 1,6 g/10 min (gemessen unter 2,16 kg Last und bei 190°C) (®Bynel 4164 der Du Pont de Nemours and Company)
- PO1;: Lineares Polyethylen mit einer Dichte von 0,905 g/cm³ und mit einem MFI von 1,0 (gemessen unter 2,16 kg Last und bei 190°C) (®Attane SL4102 der Dow Chemical Company)
- PO2:: Ethylen-Methacrylsäure-Copolymer (12 Gew.-% Methacrylsäure) mit einem MFI von 1,5 g/10 min (gemessen unter 2,16 kg Last und bei 190°C) (®Nucrel 1202 HC der Du Pont de Nemours and Company)
- PA-Ab:: Antiblock-Masterbatch aus Polyamid 6 und Calciumcarbonat (Gewichtsverhältnis 98:2) (®Grilon XE 3690 der Ems-Chemie AG)
- PO-Ab:: Antiblock-Masterbatch aus Polyethylen-LDPE und Calciumcarbonat (Gewichtsverhältnis: 90:10) (Polybatch AB5 der Schulman Plastics B.V.)

### Zur Herstellung verwendete Maschinentechnik:

Verwendet wurden Mehrschicht-Extrusionsanlagen nach dem Stand der Technik mit Rohrkalibriersystem, nachgeschalteter Streckzone zur biaxialen Blasenreckung und abschließender Thermofixierung (sog. Double-Bubble-Anlagen).

Für die Beispiele 1 bis 5 wurde eine Anlage mit 7-Schicht-Ringdüse verwendet, welche durch fünf einzelne Extruder gespeist wurde. Per Strömungsteiler wurden die Schmelzeströme zweier Extruder hälftig auf die Schichten 2 und 6 sowie 3 und 5 (Beispiele 1 bis 3) bzw. auf die Schichten 2 und 5 sowie 4 und 6 (Beispiele 4 und 5) verteilt. Die restlichen Extruder waren direkt an die Verteilungen für die übrigen Schichten angeschlossen.

Für die Vergleichsbeispiele gelangte eine Anlage mit 5-Schicht-Ringdüse, an welcher für jede Schicht ein separater Extruder angeschlossen war, zum Einsatz.

### Meßgrößen zur Charakterisierung von Proben aus den Beispielen:

- *Reißspannung [Nlmm²] und* • *Reißdehnung [%]*
   bestimmt per Zug-Dehungsmessung gemäß DIN 53455 an längs und quer ausgeschnittenen Probestreifen von 15 mm Breite und 50 mm Einspannlänge, die vor der Messung für 30min in kaltes Wasser eingelegt worden waren.
- *Wasserdampfdurchlässigkeit [g* / *m² d]*
   bestimmt gemäß DIN 53122 an Ausschnitten aus frisch hergestellten Mustern, wobei diese von der Innenseite her mit einer relativen Feuchte von 85% gegen 0% und bei einer Temperatur von 23°C beaufschlagt wurden.
- *Sauerstoffdurchlässigkeit - ohne Vorbeanspruchung [cm³* / *m² d bar]*
   bestimmt gemäß DIN 53380, Teil 3 an Ausschnitten aus frisch hergestellten Mustern mit dem Gerät ®Oxtran der Fa. Mocon bei einer relativen Feuchte von 53% und einer Temperatur von 23°C. Die Einspannfläche der Proben betrug jeweils 38,5 cm². Es wurden jeweils 5 Einzelproben vermessen und die Meßwerte gemittelt.
- *Sauerstoffdurchlässigkeit - mit Vorbeanspruchung [cm³* / *m² d bar]*
   Die Bestimmung erfolgte über zwei Schritte:

### 1. mechanische Wechselknick-Beanspruchung

Die Beanspruchung erfolgte mittels eines Gelbo-Testers gemäß der Norm ASTM F392-93 (1999), Abschnitte 5 bis 8 und gemäß der unter Absatz 8.1.5 aufgeführten Bedingung D. Eingesetzt wurden Folienausschnitte von 280 mm (längs zur Laufrichtung) mal 200 mm (quer zur Laufrichtung). Je Ausführungsbeispiel wurden 5 Ausschnitte so behandelt.

### 2. Messung

Aus jedem der vorbeanspruchten Folienausschnitte wurde jeweils mittig eine Probe von 38,5 cm² geschnitten und an dieser die Sauerstoffdurchlässigkeit wie oben beschrieben gemessen. Die so erhaltenen 5 Meßwerte je Ausführungsbeispiel wurden ebenfalls gemittelt. Zusätzlich wurde der niedrigste und der höchste Einzelwert je Meßreihe notiert.

### Beispiele 1 bis 5

In der ersten oben beschriebenen Extrusionsanlage wurden über 5 Extruder 7 separate Schmelzeströme generiert und diese nach Austritt aus der Düse zu Vorschläuchen von 23 mm Durchmesser verfestigt. Die Vorschläuche wurden biaxial um einen Faktor von 8,3 verstreckt, anschließend durch eine Thermofixierzone geführt, flachgelegt und aufgewickelt. Die resultierenden Hüllen hatten ein Kaliber von 65 und einen Schrumpf (gemessen nach 15 min Einlegen in 80°C warmes Wasser) von ca. 12 % in Längsrichtung und ca.10 % in Querrichtung. Die eingesetzten Kunststoffe bzw. -gemische, deren Anordnung in der Hüllenstruktur und die Gesamtdicken sind aus Tabellen 1 und 2 zu entnehmen.

**Tabelle 1: Schichtaufbauten zu Beipielen 1 bis 3**

| Beispiel Nr. (Ausführungsform Nr.) | Schicht (1=außen) | Zusammensetzung [Gew.-%] | Dicke Einzelschicht [µm/%] | Dicke der Gesamtstruktur [µm] |
|---|---|---|---|---|
| 1 | 1 | PA1 (75), PA2 (20), PA-Ab (5) | 15 / 30 | 50 |
| (2a) | 2 | HV (50), PO1 (50) | 5 / 10 | |
| | 3 | EVOH (100) | 2,5 / 5 | |
| | 4 | PA2 (100) | 15 / 30 | |
| | 5 | EVOH (100) | 2,5 / 5 | |
| | 6 | HV (50), PO1 (50) | 5 / 10 | |
| | 7 | PA1 (95), PA-Ab (5) | 5 / 10 | |
| | | | | |
| 2 | 1 | PA1 (75), PA2 (20), PA-Ab (5) | 10 / 20 | 50 |
| (2c) | 2 | HV (50), PO1 (50) | 4 / 8 | |
| | 3 | EVOH (100) | 3,5 / 7 | |
| | 4 | PA2 (100) | 15 / 30 | |
| | 5 | EVOH (100) | 3,5 / 7 | |
| | 6 | HV (50), PO1 (50) | 4 / 8 | |
| | 7 | PO1 (15), PO2 (80), PO-Ab (5) | 10 / 20 | |
| | | | | |
| 3 | 1 | PA1 (75), PA2 (20), PA-Ab (5) | 28 / 50 | 56 |
| (2e) | 2 | HV (50), PO1 (50) | 3,9 / 7 | |
| | 3 | EVOH (100) | 2,8 / 5 | |
| | 4 | HV (30), PO1 (70) | 9 / 16 | |
| | 5 | EVOH (100) | 2,8 / 5 | |
| | 6 | HV (50), PO1 (50) | 3,9 / 7 | |
| | 7 | PA1 (95), PA-Ab (5) | 5,6 / 10 | |

**Tabelle 2: Schichtaufbauten zu Beipielen 4 und 5**

| Beispiel Nr. (Ausführungsform Nr.) | Schicht (1=außen) | Zusammensetzung [Gew.-%] | Dicke Einzelschicht [µm / %] | Dicke der Gesamtstruktur [µm] |
|---|---|---|---|---|
| 4 | 1 | PA1 (75), PA2 (20, PA-Ab (5) | 16,8 / 35 | 48 |
| (4a) | 2 | EVOH (100) | 3,8 / 8 | |
| | 3 | PA2 (100) | 6,7 / 14 | |
| | 4 | HV (50), PO1 (50) | 4,8 / 10 | |
| | 5 | EVOH (100) | 3,8 / 8 | |
| | 6 | HV (50), PO1 (50) | 4,8 / 10 | |
| | 7 | PA1 (95), PA-Ab (5) | 7,3 / 15 | |
| | | | | |
| 5 | 1 | PA1 (75), PA2 (20, PA-Ab (5) | 20,8 / 40 | 52 |
| (4c) | 2 | EVOH (100) | 3,6 / 7 | |
| | 3 | PA2 (100 | 8,4 / 16 | |
| | 4 | HV (50), PO1 (50) | 5,2 / 10 | |
| | 5 | EVOH (100) | 3,6 / 7 | |
| | 6 | HV (50), PO1 (50) | 5,2 / 10 | |
| | 7 | PO1 (15), PO2 (80), PO-Ab (5) | 5,2 / 10 | |

### Vergleichsbeispiele V1 und V2

Mit der oben beschriebenen Extrusionsanlage wurden 5 separate Schmelzeströme generiert und einer 5-Schichtdüse zugeführt. Die aus der Düse austretenden Schmelzefilme wurden zu Vorschläuchen von 23mm Durchmesser verfestigt. Die Vorschläuche wurden biaxial um einen Faktor von 8,35 verstreckt, anschließend durch eine Thermofixierzone geführt, flachgelegt und aufgewickelt. Die resultierenden Hüllen hatten wieder ein Kaliber von 65 und einen Schrumpf (gemessen nach 15 min Einlegen in 80°C warmes Wasser) von ca. 12% in Längsrichtung und ca. 10% in Querrichtung.

Die eingesetzten Kunststoffe bzw. Kunststoffgemische, deren Anordnung in der Hüllenstruktur und die Gesamtdicken sind aus Tabelle 3 zu entnehmen.

**Tabelle 3: Schichtaufbauten zu den Vergleichsbeispielen**

| Beispiel Nr. | Schicht (1 =außen) | Zusammensetzung [Gew.-%] | Dicke Einzelschicht [µm /%] | Dicke der Gesamtstruktur [µm] |
|---|---|---|---|---|
| V1 | 1 | PA1 (75), PA2 (20), PA-Ab (5) | 27,5 / 55 | 50 |
| | 2 | HV (50), PO1 (50) | 5 / 10 | |
| | 3 | EVOH (100) | 5 / 10 | |
| | 4 | HV (50), PO1 (50) | 7,5 / 15 | |
| | 5 | PA1 (95), PA-Ab (5) | 5 / 10 | |
| | | | | |
| V2 | 1 | PA1 (75), PA2 (20), PA-Ab (5) | 18,2 / 35 | 52 |
| | 2 | EVOH (100) | 5,2 / 10 | |
| | 3 | PA2 (100) | 15,6 / 30 | |
| | 4 | PO1 (50), HV (50) | 7,8 / 15 | |
| | 5 | PA1 (95), PA2 (5) | 5,2 / 10 | |

Die an Proben aus den Beispielen ermittelten Meßwerte sind in der nachfolgenden Tabelle 4 aufgeführt. Man erkennt daran deutlich die Überlegenheit der erfindungsgemäßen Hüllen hinsichtlich der Toleranz ihrer Sauerstoffbarriere gegenüber mechanischer Beanspruchung. Hüllenproben aus Beispielen 1 bis 5 zeigen keine oder nur eine geringe Veränderung der Sauerstoffdurchlässigkeit nach der mechanischen Knickbeanspruchung, während bei den Hüllen gemäß Stand der Technik (V1 und V2) die Beanspruchung zu erhöhten und stark schwankenden Werten führt. In den sonstigen gemessenen Eigenschaften zeigen sich die erfindungsgemäßen Hüllen zum Stand der Technik gleichwertig.

**Tabelle 4: Prüfwerte der Hüllen gemäß Beispielen**

| Beispiel Nr. | Reißspannung [N/mm²] | | Reißdehnung [%] | | Wasserdampfdurchlässigkeit | Sauerstoffdurchlässigkeit [cm³ /m² d bar] | |
|---|---|---|---|---|---|---|---|
| | Längs | quer | Längs | quer | [g/m²d] | ohne Vorbeanspruchung | nach Vorbeanspruchung |
| 1 | 120 | 100 | 90 | 105 | 6,3 | 3,8 | 3,8-4,1 (Ø=3,95) |
| 2 | 95 | 85 | 95 | 115 | 3,8 | 2,7 | 2,6 - 2,9 (Ø = 2,8) |
| 3 | 105 | 95 | 105 | 125 | 4,1 | 3,5 | 3,5 - 3,9 (Ø = 3,7) |
| 4 | 110 | 100 | 85 | 110 | 6,4 | 2,6 | 2,5 - 3,0 (Ø = 2,7) |
| 5 | 85 | 80 | 95 | 120 | 4,2 | 2,7 | 2,8 - 3,1 (Ø = 2,9) |
| V1 | 105 | 90 | 85 | 100 | 5,4 | 3,7 | 4,2 -12,1 (Ø= 7,6 ± 3) |
| V2 | 115 | 95 | 75 | 90 | 8,2 | 3,6 | 5,8-12,5 (Ø= 9,5 ± 3) |

## Patentansprüche

1. Mehrschichtige, schlauchförmige, nahtlose Wursthülle mit Sauerstoff-Barriereeigenschaften, die mindestens 6-schichtig ist mit zwei innenliegenden, voneinander isolierten Schichten aus EVOH-Copolymeren und/oder aus einem Gemisch aus mindestens 50 Gew.-% EVOH-Copolymeren und wenigstens einem weiteren Polymer, **dadurch gekennzeichnet, daß** die Hülle mindestens eine innenliegende Schicht auf Basis von Polyamid aufweist.

2. Wursthülle gemäß Anspruch 1, **dadurch gekennzeichnet, daß** das EVOH-Copolymer 29 bis 47 mol-% Ethylen-Einheiten, 71 bis 53 mol-% Vinylalkohol-Einheiten und 0 bis 5 mol-% Vinylacetat-Einheiten enthält.

3. Wursthülle gemäß Anspruch 1 oder 2, **dadurch gekennzeichnet, daß** die EVOH-Schichten eine Dicke von 2 bis 15 µm aufweisen.

4. Wursthülle gemäß einem oder mehreren der Ansprüche 1 bis 3, **dadurch gekennzeichnet, daß** die EVOH-Schichten bis zu <50 Gew.-% mindestens eines weiteren Polymers enthalten.

5. Wursthülle gemäß Anspruch 4, **dadurch gekennzeichnet, daß** das weitere Polymer ein aliphatisches und/oder teilaromatisches Copolyamid und/oder ein Ethylen-Einheiten enthaltendes Copolymer ist.

6. Wursthülle gemäß Anspruch 1, **dadurch gekennzeichnet, daß** die weiteren Schichten solche auf Basis von Polyamid, Polyolefin und/oder Haftvermittler-Schichten sind.

7. Wursthülle gemäß Anspruch 6, **dadurch gekennzeichnet, daß** die Schicht(en) auf Basis von Polyamid aliphatisches (Co-)Polyamid oder eine Mischung aus aliphatischem und teilaromatischem (Co-)Polyamid enthalten.

8. Wursthülle gemäß Anspruch 7, **dadurch gekennzeichnet, daß** Schichten auf Basis von (Co-)Polyamid eine Dicke von 5 bis 40 µm aufweisen.

9. Wursthülle gemäß Anspruch 8, **dadurch gekennzeichnet, daß** die Dicke aller Schichten auf Basis von Polyamid einen Anteil von 40 bis 70 %, bezogen auf die Gesamtdicke, ausmacht.

10. Wursthülle gemäß Anspruch 6, **dadurch gekennzeichnet, daß** Schichten auf Basis von Polyolefin ein olefinisches (Co-)Polymer, bevorzugt ein Polyethylen (HDPE oder LDPE), ein Ethylen/alpha-Olefin-Copolymer, Polypropylen, ein Ethylen/Propylen-Copolymer und/oder ein Terpolymer aus verschiedenen Olefinen enthalten.

11. Wursthülle gemäß Anspruch 6, **dadurch gekennzeichnet, daß** Schichten auf Basis von Polyolefin heterofunktionelle Olefin-Copolymere, bevorzugt solche aus Ethylen und Vinylacetat, Ethylen und (Meth-)Acrylsäure, die entsprechenden Na- bzw. Zn-lonen enthaltenden lonomere, Copolymere aus Ethylen und Alkylestern der (Meth-)Acrylsäure sowie entsprechende funktionelle Terpolymeren enthalten.

12. Wursthülle gemäß Anspruch 6, **dadurch gekennzeichnet, daß** Schichten auf Basis von Polyolefin (jeweils) eine Dicke von 5 bis 30 µm aufweisen.

13. Wursthülle gemäß Anspruch 6, **dadurch gekennzeichnet, daß** die Dicke aller Schichten auf Basis von Polyolefin einen Anteil von 20 bis 50 %, bezogen auf die Gesamtdicke, ausmacht.

14. Wursthülle gemäß Anspruch 6, **dadurch gekennzeichnet, daß** Haftvermittler-Schichten ein olefinhaltiges Polymer umfassen, das mit funktionellen Gruppen modifiziert ist.

15. Wursthülle gemäß Anspruch 6, **dadurch gekennzeichnet, daß** Haftvermittler-Schichten eine Dicke 2 bis 20 µm aufweisen.

16. Wursthülle gemäß Anspruch 14, **dadurch gekennzeichnet, daß** das olefinhaltige Polymer ein Polyethylen oder Ethylen-α-Olefin-Copolymer, gepfropft mit einem Anhydrid einer α,β-ungesättigten Dicarbonsäure, ein Ethylen/Vinylacetat-Copolymer, ein Ethylen/(Meth)Acrylsäure-Copolymer oder deren Na- oder Zn-Salz, ein Ethylen-(Meth)Acrylsäureester-Copolymer oder ein entsprechendes Terpolymer ist.

17. Wursthülle gemäß Anspruch 14, **dadurch gekennzeichnet, daß** nicht funktionalisierte Olefin-(Co-)Polymere beigemischt sind.

18. Verfahren zur Herstellung einer Wursthülle gemäß einem oder mehreren der Ansprüche 1 bis 17, **dadurch gekennzeichnet, daß** die für die jeweiligen Schichten bestimmten Kunststoffe oder Kunststoffmischungen aufgeschmolzen und plastifiziert werden, daß die Schmelzen in einer beheizten Coextrusions-Ringdüse zusammengeführt und extrudiert werden, daß das schlauchförmige Extrudat zu einem Folienschlauch aufgeblasen oder nach einer vorübergehenden Abkühlung biaxial verstreckt wird, wobei die biaxial verstreckte Schlauchfolie gegebenenfalls thermofixiert wird.

## Claims

1. A multilayer, tubular, seamless sausage casing having oxygen-barrier properties which comprises at least 6 layers having two internal layers isolated from one another made of EVOH copolymers and/or made of a mixture of at least 50 % by weight of EVOH copolymers and at least one further polymer, wherein the casing comprises at least one polyamide-based internal layer.

2. The sausage casing as claimed in claim 1, wherein the EVOH copolymer contains 29 to 47 mol % ethylene units, 71 to 53 mol % vinyl alcohol units and 0 to 5 mol % vinyl acetate units.

3. The sausage casing as claimed in claim 1 or 2, wherein the EVOH layers have a thickness of 2 to 15 µm.

4. The sausage casing as claimed in one or more of claims 1 to 3, wherein the EVOH layers contain up to < 50 % by weight of at least one further polymer.

5. The sausage casing as claimed in claim 4, wherein the further polymer is an aliphatic and/or partially aromatic copolyamide and/or a copolymer containing ethylene units.

6. The sausage casing as claimed in claim 1, wherein the further layers are those based on polyamide, polyolefin and/or adhesion-promoter layers.

7. The sausage casing as claimed in claim 6, wherein the polyamide-based layer(s) contain aliphatic (co)polyamide or a mixture of aliphatic and partially aromatic (co)polyamide.

8. The sausage casing as claimed in claim 7, wherein (co)polyamide-based layers have a thickness of 5 to 40 µm.

9. The sausage casing as claimed in claim 8, wherein the thickness of all polyamide-based layers makes up a proportion of 40 to 70 %, based on the total thickness.

10. The sausage casing as claimed in claim 6, wherein polyolefin-based layers contain an olefinic (co)polymer, preferably a polyethylene (HDPE or LDPE), an ethylene/alpha-olefin copolymer, polypropylene, an ethylene/propylene copolymer and/or a terpolymer of various olefins.

11. The sausage casing as claimed in claim 6, wherein polyolefin-based layers contain heterofunctional olefin copolymers, preferably those of ethylene and vinyl acetate, ethylene and (meth)acrylic acid, the corresponding Na- or Zn-ion-containing ionomers, copolymers of ethylene and alkyl esters of (meth)acrylic acid and also corresponding functional terpolymers.

12. The sausage casing as claimed in claim 6, wherein polyolefin-based layers (each) have a thickness of 5 to 30 µm.

13. The sausage casing as claimed in claim 6, wherein the thickness of all polyolefin-based layers makes up a proportion of 20 to 50 %, based on the total thickness.

14. The sausage casing as claimed in claim 6, wherein adhesion-promoter layers comprise an olefin-containing polymer which is modified with functional groups.

15. The sausage casing as claimed in claim 6, wherein adhesion-promoter layers have a thickness of 2 to 20 µm.

16. The sausage casing as claimed in claim 14, wherein the olefin-containing polymer is a polyethylene or ethylene-α-olefin copolymer, grafted with an anhydride of an α,β-unsaturated dicarboxylic acid, an ethylene/vinyl acetate copolymer, an ethylene/(meth)acrylic acid copolymer or the Na or Zn salt thereof, an ethylene-(meth)acrylic ester copolymer or a corresponding terpolymer.

17. The sausage casing as claimed in claim 14, wherein non-functionalized olefin-(co)polymers are admixed.

18. A process for producing a sausage casing as claimed in one or more of claims 1 to 17, which comprises melting and plasticizing the plastics or plastics mixtures determined for the respective layers, joining together and extruding the melts in a heated coextrusion ring die, blowing the tubular extrudate to form a flexible film tube, or biaxially stretching said tubular extrudate after a temporary cooling, wherein the biaxially stretched flexible tubular film is optionally heat-set.

## Revendications

1. Enveloppe pour saucisse multicouche, de forme tubulaire, sans couture, présentant des propriétés de barrière à l'oxygène, qui comporte au moins 6 couches dont deux couches intérieures, isolées l'une de l'autre, en copolymères d'EVOH et/ou en un mélange d'au moins 50% en poids de copolymères d'EVOH et au moins un autre polymère, **caractérisée en ce que** l'enveloppe présente au moins une couche intérieure à base de polyamide.

2. Enveloppe de saucisse selon la revendication 1, **caractérisée en ce que** le copolymère d'EVOH contient 29 à 47% en mole de motifs d'éthylène, 71 à 53% en mole de motifs d'alcool de vinyle et 0 à 5% en mole de motifs d'acétate de vinyle.

3. Enveloppe de saucisse selon la revendication 1 ou 2, **caractérisée en ce que** les couches d'EVOH présentent une épaisseur de 2 à 15 µm.

4. Enveloppe de saucisse selon une ou plusieurs des revendications 1 à 3, **caractérisée en ce que** les couches d'EVOH contiennent jusqu'à <50% en poids d'au moins un autre polymère.

5. Enveloppe de saucisse selon la revendication 4, **caractérisée en ce que** l'autre polymère est un copolyamide aliphatique et/ou partiellement aromatique ou un copolymère contenant des motifs d'éthylène.

6. Enveloppe de saucisse selon la revendication 1, **caractérisée en ce que** les autres couches sont des couches à base de polyamide, de polyoléfine et/ou des couches adhésives.

7. Enveloppe de saucisse selon la revendication 6, **caractérisée en ce que** la/les couche(s) à base de polyamide contiennent un (co-)polyamide aliphatique ou un mélange de (co)-polyamides aliphatiques et partiellement aromatiques.

8. Enveloppe de saucisse selon la revendication 7, **caractérisée en ce que** les couches à base de (co-)polyamide présentent une épaisseur de 5 à 40 µm.

9. Enveloppe de saucisse selon la revendication 8, **caractérisée en ce que** l'épaisseur de toutes les couches à base de polyamide constitue une proportion de 40 à 70% par rapport à l'épaisseur totale.

10. Enveloppe de saucisse selon la revendication 6, **caractérisée en ce que** les couches à base de polyoléfine contiennent un (co-)polymère oléfinique, de préférence, un polyéthylène (HDPE ou LDPE), un copolymère d'éthylène/alpha-oléfine, un polypropylène, un copolymère d'éthylène/propylène et/ou un terpolymère de différentes oléfines.

11. Enveloppe de saucisse selon la revendication 6, **caractérisée en ce que** les couches à base de polyoléfine contiennent des copolymères d'oléfine hétérofonctionnels, de préférence, des copolymères d'éthylène et d'acétate de vinyle, d'éthylène et d'acide (méth)acrylique, les ionomères contenant des ions Na ou Zn correspondants, des copolymères d'éthylène et des alkylesters d'acide (méth)acrylique et des terpolymères fonctionnels correspondants.

12. Enveloppe de saucisse selon la revendication 6, **caractérisée en ce que** les couches à base de polyoléfine présentent (respectivement), une épaisseur de 5 à 30 µm.

13. Enveloppe de saucisse selon la revendication 6, **caractérisée en ce que** l'épaisseur de toutes les couches à base de polyoléfine constitue une proportion de 20 à 50% par rapport à l'épaisseur totale.

14. Enveloppe de saucisse selon la revendication 6, **caractérisée en ce que** les couches adhésives comprennent un polymère contenant une oléfine qui est modifié avec des groupes fonctionnels.

15. Enveloppe de saucisse selon la revendication 6, **caractérisée en ce que** les couches adhésives présentent une épaisseur de 2 à 20 µm.

16. Enveloppe de saucisse selon la revendication 14, **caractérisée en ce que** le polymère contenant une oléfine est un polyéthylène ou un copolymère d'éthylène-alpha-oléfine, greffé avec un anhydride d'un acide dicarboxylique α,β-insaturé, un copolymère d'éthylène - acétate de vinyle, un copolymère d'éthylène/ acide (méth)acrylique ou leur sel de Na ou Zn, un copolymère d'éthylène/ ester d'acide (méth)acrylique ou un terpolymère correspondant.

17. Enveloppe de saucisse selon la revendication 14, **caractérisée en ce que** des (co-)polymères d'oléfine non fonctionnalisés sont mélangés.

18. Procédé de production d'une enveloppe de saucisse selon une ou plusieurs des revendication 1 à 17, **caractérisé en ce que** l'on fait fondre et l'on plastifie différentes matières plastiques ou mélanges de matières plastiques pour les couches respectives, la masse fondue est acheminée dans une filière annulaire de co-extrusion chauffée et est extrudée, l'extrudat sous forme de tuyau est soufflé pour donner un tuyau en feuille ou est étiré biaxialement après un refroidissement provisoire, la feuille de tuyau étirée biaxialement étant éventuellement thermofixée.
